# EUROPÄISCHE PATENTSCHRIFT

(11) **EP 4 148 078 B1**
(45) Veröffentlichungstag und Bekanntmachung des Hinweises auf die Patenterteilung: **05.11.2025**
(21) Anmeldenummer: 21195430.0
(22) Anmeldetag: 08.09.2021
(51) Int. Cl.: C08G 18/09, C08G 18/16, C08G 18/18, C08G 18/22, C08G 18/42, C08G 18/48, C08G 18/76, C08G 63/672, C08G 65/08

(54) **AUF BERNSTEINSÄURE BASIERENDE POLYESTERPOLYOLE**
SUCCINIC ACID BASED POLYESTER POLYOLS
POLYESTERPOLYOL À BASE D'ACIDE SUCCINIQUE

(43) Veröffentlichungstag der Anmeldung: 15.03.2023
(73) Patentinhaber: Covestro Deutschland AG, 51373 Leverkusen (DE)
(72) Erfinder: MARBACH, Jakob, 51069 Köln (DE); BANH, Hung, 51371 Leverkusen (DE); LORENZ, Klaus, 41539 Dormagen (DE)
(74) Vertreter: Levpat

(56) Entgegenhaltungen:
- EP-A1- 1 632 511
- WO-A1-2014/064130
- DE-A1- 102007 054 003
- SONJUI TATCHA ET AL: "Preparation and Characterization of Polyurethane Foams from Bio-based Succinate Polyols", J. SCI. CHIANG MAI J. SCI, 1 October 2017 (2017-10-01), pages 1512 - 1524, XP055899362, Retrieved from the Internet <URL:http://epg.science.cmu.ac.th/ejournal/journal-detail.php?id=8478> [retrieved on 20220309]

## Beschreibung

Die vorliegende Erfindung betrifft Polyolformulierungen enthaltend Polyesterpolyole, welche Baueinheiten enthalten, die von Bernsteinsäure abgeleitet sind, und ein Verfahren zur Herstellung von PUR-/PIR-Hartschaumstoffen unter Verwendung dieser Polyolformulierungen.

PUR-/PIR-Hartschaumstoffe werden vorwiegend auf Basis aromatischer Polyesterpolyole hergestellt, da diese die Flammwidrigkeit der PUR-/PIR-Hartschaumstoffe und die Wärmeleitfähigkeit positiv beeinflussen. Bei der Herstellung der aromatischen Polyesterpolyole finden als Rohstoffe vor allem Phthalsäure/-anhydrid, Terephthalsäure und Isophthalsäure Verwendung. Neben den aromatischen Polyesterpolyolen werden gelegentlich noch Polyetherpolyole und teilweise auch aliphatische Polyesterpolyole zugesetzt, um das Löslichkeitsverhalten von Pentanen gegenüber den aromatischen Polyesterpolyolen zu verbessern oder die Sprödigkeit der isocyanurathaltigen PUR-/PIR-Hartschaumstoffe zu reduzieren.

In den letzten Jahren wird der Einsatz von aliphatischen Polyesterpolyolen häufiger vorgeschlagen. WO 97/48747 lehrt beispielsweise, dass sich PUR-/PIR-Hartschaumstoffe mit verringerter Sprödigkeit und verbesserter Oberflächenhaftung herstellen lassen, wenn die Polyolkomponente sowohl aromatische als auch aliphatische Polyesterpolyole enthält.

DE 10 2007 054003 A1 offenbart Polyurethane aus NDI als Polyisocyanat und einem Polyesterpolyol auf Bernsteinsäurebasis als Polyol.

Sonjui Tatcha et al.: "Preparation and Characterization of Polyurethne Foams from Bio-based Succinate Polyols", J. Sci. Chiang Mai J. Sc., 1. Januar 2017 (2017-01-01), Seiten 1512-1524, XP55899362 offenbart die Herstellung von PUR-Weich- oder Hart-Schaumstoffen aus biobasierten Bernsteinsäurepolyestern.

EP 1 632 511 A1 offenbart PUR/PIR-Hartschaumstoffe, basierend auf aliphatischen Polyesterpolyolen, die durch Umsetzung von Adipinsäure, sowie Bernsteinsäure, Glutarsäure und/oder Sebacinsäure mit polyfunktionellen Alkoholen erhalten werden.

Im Bereich der Dämmplattenherstellung erfreuen sich aliphatische Polyester-basierte PUR-/PIR-Hartschäume steigender Nachfrage. Nach der Lehre von EP 1 632 511 A1 können die Polyesterpolyole aus technischer Glutarsäure sowie Ethylenglykol aufgebaut sein. Es wurde gefunden, dass Formulierungen enthaltend diese Polyesterpolyole in Verbindung mit Polyetherpolyolen PUR-/PIR-Hartschäume mit gegenüber aromatischen Polyesterpolyolen vorteilhaften Eigenschaften beispielsweise bezüglich Brand und Haftung aufweisen können. Es wird unter anderem die Verwendung eines aliphatischen Polyetherpolyols, hergestellt durch Alkoxylierung eines aliphatischen Starters zuerst mit einem Propylenylenoxid- (PO-)Block und dann einem Ethylenylenoxid- (EO)-Block - Gemisch mit einem Blocklängenverhältnis PO/EO = 70/30 und mit einer OH-Zahl von 28 mg KOH/g, einer Molmasse von 4000 Da und ca. 90 mol-% primären OH-Endgruppen und einer Viskosität von 860 mPa · s bei 25 °C vorgeschlagen. In der EP 2 984 166 A wird gezeigt, dass eine Mischung aus Polyestern basierend auf technischer Glutarsäure mit diesem Polyetherpolyol erst ab einem bestimmten aromatischen Anteil (basierend auf Phthalsäure) phasenstabil wird.

Bei technischer Glutarsäure handelt es sich in der Regel um ein Gemisch aus Glutarsäure sowie geringeren Anteilen an Bernsteinsäure und Adipinsäure. Die durch den Einsatz des Gemisches resultierende gestörte Molekülstruktur führt dazu, dass die Polyester nur eine geringe Kristallisationstendenz zeigen. Setzt man hingegen überwiegend Bernsteinsäure als Säurekomponente für die Herstellung der Polyesterpolyole ein, ist diese Kristallisationstendenz deutlich erhöht, weswegen diese Polyester schwierig zu lagern und zu verarbeiten sind. Der Einsatz von überwiegend Bernsteinsäure bzw. ihren Derivaten als Säurekomponenten in der Polyestersynthese ist aber aus verschiedenen Gründen interessant, insbesondere steht die Bernsteinsäure als nachhaltige, aus Biomasse gewinnbare Rohstoffquelle zur Verfügung.

Die Aufgabe der vorliegenden Erfindung bestand also darin, Polyesterpolyole B1), welche Baueinheiten enthalten, die von > 50 Gew.-% Bernsteinsäure in der Säurekomponente abgeleitet sind, zur Verfügung zu stellen, welche nur eine geringe Kristallisationsneigung zeigen und sich daher für Formulierungen eignen, die sich für PUR-/PIR-Hartschaumrezepturen einsetzen lassen. Außerdem bestand die Aufgabe darin, Polyolformulierungen B) enthaltend die Polyesterpolyole B1) zur Verfügung zu stellen, wobei B) eine gute Pentanlöslichkeit aufweisen soll und sich mit B) PUR-/PIR-Hartschaumstoffe mit niedriger Wärmeleitfähigkeit und sehr guter Dimensionsstabilität herstellen lassen sollen. Die so erhältlichen Hartschäume sollen zudem gute Brandschutzeigenschaften aufweisen.

Der Polyesterpolyol enthält Baueinheiten, welche von Bernsteinsäure abgeleitet sind, und ist erhältlich durch die Umsetzung einer Säurekomponente, welche ≥ 50 Gew.-%, bevorzugt ≥ 70 Gew.-% und ganz besonders bevorzugt ≥ 80 Gew.-% Bernsteinsäure oder Bernsteinsäureanhydrid enthält, mit einer Alkoholkomponente, welche ≥ 50 Gew.-% , insbesondere ≥ 60 Gew.-% Diethylenglykol oder eine Mischung aus Monoethylenglykol und Diethylenglykol im molaren Verhältnis von < 2 enthält.

Insbesondere kann die Bernsteinsäure in der Säurekomponente vor der Umsetzung auch als Anhydrid vorliegen.

Die Alkoholkomponente zur Herstellung des Polyesterpolyols B1) kann neben dem Diethylenglykol bzw. der Monoethylenglykol/Diethylenglykol - Mischung z.B. auch 1,2-Propandiol, 1,3-Propandiol, 1,4-Butandiol, 3-Methyl-1,5-pentandiol, 1,5-Pentandiol, 1,6-Hexandiol, 1,10-Decandiol, Glycerin, Trimethylolpropan, bzw. Mischungen daraus oder Alkoxylate dieser di- und trifunktionellen Alkohole enthalten, insbesondere Triethylenglykol, Tetraethylenglykol oder höhere Polyethylenglykole. Bevorzugt besteht die Alkoholkomponente zu ≥ 50 Gew.-% , insbesondere ≥ 60 Gew.-% aus einer Mischung von Monoethylenglykol und Diethylenglykol im molaren Verhältnis von < 2, mehr bevorzugt < 1,8.

Vorzugsweise weisen die Polyesterpolyole B1) eine Funktionalität von 1,8 bis 5, insbesondere von 1,9 bis 3,0, eine OH-Zahl von 15 bis 500 mg KOH/g, insbesondere von 150 bis 300, sowie eine Säurezahl von 0,2 bis 3,0 mg KOH/g auf.

Gegenstand der Erfindung sind auch PUR-/PIR-Hartschaumstoffe, erhältlich durch Umsetzung einer organischen Polyisocyanatkomponente A) mit einer Verbindungen mit gegenüber Isocyanatgruppen reaktive Wasserstoffatome enthaltenden Formulierung B) bei einem Isocyanatindex von 100 bis 600, besonders bevorzugt 140 bis 450 in Gegenwart geeigneter Hilfs- und Zusatzstoffe sowie Treibmittel und Co-Treibmittel, wobei die Formulierung B) mindestens ein erfindungsgemäßes Polyesterpolyol B1) enthält.

Die erfindungsgemäße Formulierung B) zur Herstellung von PUR-/PIR-Hartschaumstoffe kann optional neben B1) weitere Komponenten enthalten, insbesondere B2) weitere Polyole, welche von B1) verschieden sind, B3) weitere isocyanat-reaktive Verbindungen, welche von den Polyolen B1) und B2) verschieden sind, B4) Hilfs- und Zusatzstoffe und / oder B5) Wasser.

Bei den weiteren, von B1) verschiedenen Polyolen B2) handelt es sich insbesondere um solche Polyole ausgewählt aus der Gruppe bestehend aus Polyesterpolyolen, Polyetherpolyolen, Polycarbonatpolyolen, Polyethercarbonatpolyolen und Polyetheresterpolyolen.

Es ist bevorzugt, dass insgesamt der Anteil an Verbindungen aus der Gruppe bestehend aus Polyesterpolyolen und Polyetheresterpolyolen in der Komponente B), bezogen auf das Gesamtgewicht der isocyanat-reaktiven Verbindungen in der Komponente B), mindestens 40 Gew.-%, besonders bevorzugt mindestens 50 Gew.-% und ganz besonders bevorzugt mindestens 55 Gew.-% beträgt. In einer besonders bevorzugten Ausführungsform beträgt der Anteil an Polyesterpolyolen an allen isocyanat-reaktiven Verbindungen in der Komponente B) 60 - 100 Gew.-%.

Neben den Verbindungen B1) weitere geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Die Polyesterpolyole können aus aromatischen und / oder aliphatischen Bausteinen hergestellt werden.

Zur Herstellung der Polyesterpolyole kommen auch biobasierte Ausgangsstoffe und/oder deren Derivate in Frage, wie z. B. Fettsäuren und Fettsäurederivate. Der anteilige Einsatz insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Polyetheresterpolyole enthalten neben den Ester- und OH-Gruppen auch Ethergruppen. Zu ihrer Herstellung werden neben den Polyesterkomponenten Polyetherpolyole eingesetzt, die man durch Alkoxylierung von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten. Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Sind in B) neben B1) weitere Polyesterpolyole und/oder Polyetheresterpolyole B2 enthalten, weisen diese bevorzugt Funktionalitäten von ≥1,2 bis ≤ 3,5, insbesondere ≥1,6 bis ≤ 2,4 und eine Hydroxylzahl zwischen 80 bis 290 mg KOH/g, besonders bevorzugt 150 bis 270 mg KOH/g und insbesondere bevorzugt von 160 - 260 mg KOH/g, auf. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen. Daneben kann die Anwesenheit eines aromatischen Polyesterpolyols mit einer Hydroxylzahl von 320 bis 450 mg KOH/g und einer mittleren Funktionalität von 3 bis 4,5 vorteilhaft sein, vorzugsweise in einem Gehalt von bis zu 5 Gew.-% (bezogen auf das Gesamtgewicht an isocyanat-reaktiven Verbindungen in der Komponente B).

Der Zusatz von langkettigen Polyolen, insbesondere Polyetherpolyolen, kann die Verbesserung der Fließfähigkeit des Reaktionsgemisches und der Verträglichkeit mit dem physikalischen Treibmittel, z.B. Pentan, bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von ≥ 1,2 bis ≤ 3,5 auf und besitzen eine Hydroxylzahl zwischen 10 und 100 mg KOH/g, bevorzugt zwischen 20 und 80 mg KOH/g. Sie besitzen mehr als 50 mol%, bevorzugt mehr als 55 mol% und weniger als 85 mol% primäre OH-Gruppen.

Ein Anteil von bevorzugt 3,0 - 15,0 Gew.-% eines solchen Polyols führt zu einer Verbesserung der Sprödigkeit und des Brandverhaltens sowie einer Senkung der Offenzelligkeit bei den mit der Formulierung B) hergestellten Hartschaumstoffen.

Insbesondere bevorzugt ist der Zusatz von langkettigen aliphatischen Polyetherpolyolen, welche erhältlich sind durch Alkoxylierung einer Starterkomponente, bevorzugt einer aliphatischen Starterkomponente, mit Ethylenoxid (EO) und Propylenoxid (PO) im Verhältnis von EO/PO = 40/60 - 60/40, mehr bevorzugt von 45/55 - 55/45, und mit einer OH-Zahl von 10 - 100 mg KOH/g, besonders 20 - 80 mg KOH/g und ganz besonders 30 - 70 mg KOH/g. Die Epoxide können während der Alkoxylierung nacheinander dosiert werden, so dass die resultierenden Polyetherketten Blockstrukturen aufweisen, es kann aber auch direkt mit einem EO/PO - Gemisch alkoxyliert werden, wobei Polyetherketten mit statistisch verteilten Oxyalkylenbausteinen erhalten werden. Der Polyether weist bevorzugt > 50 mol-% primäre OH-Endgruppen auf, insbesondere bevorzugt mehr als 55 mol% und weniger als 85 mol% primäre OH-Gruppen.

Der Zusatz dieser Polyetherpolyole zu der Polyolformulierung ist besonders vorteilhaft einerseits im Hinblick auf die Verträglichkeit von Polyester und Polyether miteinander, andererseits auf die Pentanverträglichkeit der Formulierung B), was vorteilhaft für die Verarbeitung in PUR/PIR-Hartschäumen ist.

Weiterhin kann der Zusatz von weiteren Polyolen, insbesondere kurzkettigen Polyetherpolyolen, und niedermolekularen isocyanat-reaktiven Verbindungen, die Verbesserung der Haftung und Dimensionsstabilität des resultierenden Schaumes bewirken. Für die Herstellung von Verbundelementen mit dem erfindungsgemäßen Verfahren können diese Polyole die kontinuierliche Produktion von Elementen mit flexiblen oder starren Deckschichten ermöglichen. Die weiteren Polyole, bei denen es sich insbesondere um Polyetherpolyole handelt, weisen Funktionalitäten von ≥ 2 bis ≤ 6 auf und besitzen Hydroxylzahlen zwischen 300 und 700 mg KOH/g.

Bei den verwendeten Polyetherpolyolen handelt es sich im Allgemeinen um dem Fachmann bekannte, in der Polyurethansynthese einsetzbare Polyetherpolyole mit den genannten Merkmalen.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen. Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Neben den beschrieben Polyolen B1) und B2) können in B) weitere isocyanat-reaktive Verbindungen B3) enthalten sein, z.B. Polyamine, Polyhydroxyverbindungen, Polyaminoalkohole und Polythiole. Insbesondere werden auch niedermolekulare Kettenverlängerer und Vernetzer eingesetzt. Selbstverständlich umfassen die beschriebenen isocyanat-reaktiven Komponenten auch solche Verbindungen mit gemischten Funktionalitäten. Diese Zusätze können eine Verbesserung der Fließfähigkeit des Reaktionsgemisches und der Emulgierfähigkeit der treibmittelhaltigen Formulierung bewirken.

In der Formulierung B) können neben den Komponenten B2) und B3) weitere Hilfs- und Zusatzstoffe B4) vorhanden sein, z.B. ausgewählt aus Emulgatoren, Flammschutzmitteln und Katalysatoren. Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Formulierung B). Bevorzugte Emulgatoren sind Polyetherpolysiloxancopolymerisate. Solche sind beispielsweise unter der Bezeichnung Tegostab^{®} B84504 und B8443 der Firma Evonik, Niax* L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit können der Formulierung B) zudem Flammschutzmittel zugesetzt werden. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris(ß-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Komponenten B und C eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft. Zu B3) zählen auch Isocyanat-reaktive Flammschutzmittel wie die Ester bromierter Phthalsäuren oder Derivate des Dibrombutendiols, wie sie z. B. unter dem Markennamen Ixol^{®} vertrieben werden.

Die Formulierung B) kann gegebenenfalls auch in der Polyurethanchemie übliche Katalysatoren enthalten. Die zur Herstellung eines PUR-/PIR-Hartschaumstoffes nötigen aminischen Katalysatoren sowie die als Trimerisationskatalysatoren eingesetzten Salze werden in solcher Menge eingesetzt, dass z.B. sowohl auf kontinuierlich produzierenden Anlagen Elemente mit flexiblen Deckschichten mit Geschwindigkeiten bis zu 60 m/min je nach Elementstärke produziert werden können als auch Schaumstoffisolierungen für Rohre, Wände, Dächer sowie Tanks und Kühlschränke im Sprühschaumverfahren mit hinreichender Aushärtezeit hergestellt werden können. Auch eine diskontinuierliche Herstellung ist möglich. In vielen Fällen wird der Katalysator allerdings erst der Polyurethan-Reaktionsmischung aus der Polyisocyanat-Komponente A) und der Formulierung B) zugegeben.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydro-pyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Weiterhin umfasst die Komponente B4) auch alle anderen Additive, die Polyurethanreaktionsmischungen zugesetzt werden können. Beispiele für solche Additive sind Zellregulantien, Thixotropiermittel, Weichmacher und Farbstoffe.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Verfahren ohne Katalysator, Juni 2013).

Die "Säurezahl" wird im Rahmen der vorliegenden Erfindung bestimmt nach der Norm DIN EN ISO 2114:2002-06.

Die "Funktionalität" bezeichnet im Rahmen der vorliegenden Erfindung die theoretische, aus den bekannten Einsatzstoffen und deren Mengenverhältnissen berechnete mittlere Funktionalität (zahlengemittelte Anzahl an gegenüber Isocyanaten bzw. gegenüber Polyolen reaktiven Funktionen im Molekül).

Die "Viskosität" bzw. "dynamische Viskosität" bezeichnet im Rahmen der vorliegenden Erfindung die dynamische Viskosität, welche bestimmt werden kann entsprechend DIN 53019-1 (September 2008).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und Komponenten.

Zudem betrifft die Erfindung die Verwendung der erfindungsgemäßen Formulierung B) bei der Herstellung von PUR(Polyurethan)- und PUR/PIR-Hartschaumstoffen, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

Weiterhin betrifft die Erfindung ein Reaktionssystem zur Herstellung von PUR- und PUR-/PIR-Hartschaumstoffen, umfassend die folgenden Komponenten:
A) eine organische Polyisocyanatkomponente,
B) die erfindungsgemäße Formulierung B),
C) gegebenenfalls weitere Hilfs- und Zusatzstoffe und
D) optional Treibmittel und Co-Treibmittel,
wobei die organische Polyisocyanatkomponente A) zu den Komponenten B) und ggf. C) in einem solchen Mengenverhältnis zueinander eingesetzt sind, dass sich ein Isocyanatindex von 100 bis 600 ergibt, insbesondere von 140 bis 450.

Mit "Isocyanatindex" bzw. "Kennzahl" wird das mit dem Faktor 100 multiplizierte molare Verhältnis aller NCO-Gruppen der Komponente A) zu allen in dem Reaktionssystem in den Komponenten B) und C) vorliegenden NCO-reaktiven Gruppen, bezeichnet.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder l,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und sich durch folgende Summenformel beschreiben lassen: C15H10N2O2[C8H5NO]n , wobei n = ganze Zahl > 0, bevorzugt n = 1, 2, 3 und 4, ist. Höherkernige Homologe C15H10N2O2[C8H5NO]m, m = ganze Zahl ≥ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Bei den Hilfs- und Zusatzstoffen C) handelt es sich um die gleichen Verbindungen, welche unter B3) beschrieben wurden. Je nach Anwendung setzt der Fachmann diese entweder als Komponente B3) bereits der Formulierung B) zu, oder dosiert sie - wie z.B. den Katalysator - zu der Reaktionsmischung aus den Komponenten A) - D).

Für die PUR- bzw. PUR/PIR-Hartschaumstoffe weiterhin eingesetzt werden so viel Treibmittel und Co-Treibmittel D), wie zur Erzielung einer dimensionsstabilen Schaummatrix und gewünschten Rohdichte nötig ist. Der Anteil kann beispielsweise von 0 bis 6,0 Gew.-% an Co-Treibmittel und von 1,0 bis 30,0 Gew.-% an Treibmittel betragen, jeweils bezogen auf 100 Gew.-% Polyolkomponente inklusive der Hilfs- und Zusatzstoffe. Das Mengenverhältnis von Co-Treibmittel zu Treibmittel kann je nach Bedarf von 20:1 bis 0:100 betragen.

Als Treibmittel werden Kohlenwasserstoffe, z.B. die Isomeren des Butans und Pentans, Ester wie Methylformiat oder Acetale wie Methylal und Ethylal oder Fluorkohlenwasserstoffe, z.B. HFC 245fa (1,1,1,3,3-Pentafluorpropan), HFC 365mfc (1,1,1,3,3-Pentafluorbutan) oder deren Mischungen mit HFC 227ea (Heptafluorpropan) verwendet. Auch mit Fluor und mit Fluor und Chlor gemischt substituierte C3-C5 Olefine können eingesetzt werden. Es können auch verschiedene Treibmittelklassen kombiniert werden. So lassen sich z.B. mit Mischungen von n-oder c-Pentan mit HFC 245fa im Verhältnis 75:25 (n-/c-Pentan:HFC 245fa) Wärmeleitfähigkeiten, gemessen bei 10°C, von weniger als 20 mW/mK erzielen.

Als Co-Treibmittel können auch Wasser und / oder Ameisensäure eingesetzt werden, bevorzugt in einer Menge bis 6 Gew.-%, bevorzugt 0,5 bis 4 Gew.-%, bezogen auf die Gesamtmenge an Verbindungen mit gegenüber Isocyanatgruppen reaktiven Wasserstoffatomen in der Polyolkomponente. Es kann aber auch auf Wasser verzichtet werden. Auch Carbaminsäure, Malonsäure und Oxalsäure bzw. insbesondere ihre Salze mit Ammoniak und anderen Aminen können als Treibmittel geeignet sein.

In bevorzugter Ausgestaltung des erfindungsgemäßen Reaktionssystems beträgt das Gewichtsverhältnis der Komponenten A) und B) zueinander von 100 : 150 bis 100 : 300, insbesondere von 100 : 180 bis 100 : 250.

Die Formulierung B) eignet sich insbesondere gut für den Einsatz in PUR-PIR-Hartschaumrezepturen. Die mit der Formulierung B) hergestellten PUR-/PIR-Hartschäume weisen eine Kombination von guten Brandschutzeigenschaften und guten mechanischen Eigenschaften auf.

Ein weiterer Gegenstand der Erfindung ist ein Verfahren zur Herstellung von PUR-/PIR-Hartschaumstoffen, bei dem man die Komponenten A) und B) sowie gegebenenfalls C) und D) eines erfindungsgemäßen Reaktionssystems miteinander vermischt und reagieren lässt.

Die Herstellung der PUR-/PIR-Hartschaumstoffe, welche ebenfalls Gegenstand der Erfindung sind, erfolgt typischerweise nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden

Ein solcher Hartschaumstoff kann in verschiedenen Anwendungsgebieten zum Einsatz kommen, vor allem dient er als Isoliermaterial. Beispiele aus dem Bauwesen sind Wandisolationen, Rohrschalen bzw. Rohrhalbschalen, Dachisolierungen, Wandelemente und Fußbodenplatten. Insbesondere kann der Hartschaumstoff in Form einer Dämmplatte oder als Verbundelement (Laminate) mit flexiblen oder nicht-flexiblen Deckschichten vorliegen und eine Dichte von 25 bis 65 kg/ m³ aufweisen, insbesondere 28 bis 45 kg/m3. In einer anderen Ausgestaltung kann der Hartschaumstoff als Blockschaum vorliegen und eine Dichte von 25 bis 300 kg/m³ aufweisen, insbesondere 30 bis 80 kg/m3.

Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvlies, und/oder um eine starre Deckschicht, z.B. aus Stahlblech oder Spanplatten, handeln. Die Deckschichten werden von einer Rolle abgecoilt und gegebenenfalls profiliert, ggf. erwärmt und ggf. coronabehandelt, um die Beschäumbarkeit der Deckschichten zu verbessern. Auf die untere Deckschicht kann vor dem Auftragen des PUR/PIR-Hartschaumstoffsystems zusätzlich ein Primer aufgetragen werden.

In einer bevorzugten Ausführungsform enthält die Formulierung B) für die Herstellung von PUR-/PIR-Hartschaumstoffen
50 bis 95 Gew.-% einer oder mehrerer Verbindung(en) ausgewählt aus der Gruppe bestehend aus Polyesterpolyolen und Polyetheresterpolyolen mit einer Hydroxylzahl im Bereich von 80 mg KOH/g bis 290 mg KOH/g,
umfassend ein oder mehrere Polyole B1), und
1,0 - 15,0 Gew.-%, bevorzugt 2,0 - 10 Gew.-% und besonders bevorzugt 3,0 - 7,0 Gew.-% wenigstens eines Polyols ausgewählt aus langkettigen aliphatischen Polyetherpolyolen, welche erhältlich sind durch Alkoxylierung einer Starterkomponente, bevorzugt einer aliphatischen Starterkomponente, mit Ethylenoxid (EO) und Propylenoxid (PO) im Verhältnis von EO/PO = 40/60 - 60/40, mehr bevorzugt von 45/55 - 55/45, und mit einer OH-Zahl von 10 - 100 mg KOH/g, bevorzugt 20 - 80 mg KOH/g und insbesondere bevorzugt 30 - 70 mg KOH/g, wobei die Epoxide während der Alkoxylierung entweder blockweise dosiert werden oder zeitgleich als Gemisch oder in einer Paralleldosierung, resultierend in innerhalb der Polyetherketten statistisch verteilten Oxyalkyleneinheiten,
wobei die Angaben in Gew.-% für die Polyole jeweils auf alle isocyanat-reaktiven Komponenten der Formulierung B) bezogen sind.

Diese Formulierung B) lässt sich insbesondere vorteilhaft für die Herstellung von Reaktionsgemischen für PUR-/PIR-Hartschäume einsetzen, die für Dämmplatten verwendet werden. Insbesondere wird ein erfindungsgemäßes Reaktionsgemisch hergestellt durch Mischung der oben beschriebenen Formulierung B) mit einem Gemisch von Diphenylmethan-4,4'-diisocyanat mit Isomeren und höherfunktionellen Homologen als Komponente A) in Gegenwart von gegebenenfalls weiteren Hilfs- und Zusatzstoffen C) und einem Treibmittel und gegebenenfalls Co-Treibmittel D) bei einem Isocyanat-Index von bevorzugt ≥ 140 bis ≤ 450 eingesetzt.

Die vorliegende Erfindung wird anhand der nachfolgenden Beispiele näher erläutert.

### Beispiele

### 1. Methoden und Begriffe

| | |
|---|---|
| Hydroxylzahl: | Die Bestimmung der OH-Zahl erfolgte gemäß der Vorschrift der DIN 53240-1 (Verfahren ohne Katalysator, Juni 2013). |
| Säurezahl: | Die Bestimmung der Säurezahl erfolgte gemäß DIN EN ISO 2114 (Juni 2002). |
| Viskosität: | Dynamische Viskosität: Rheometer MCR 51 der Firma Anton Paar entsprechend DIN 53019-1 (September 2008) mit einem Messkegel CP 50-1, Durchmesser 50 mm, Winkel 1 ° bei Scherraten von 25, 100, 200 und 500 s⁻¹. Die erfindungsgemäßen und nicht erfindungsgemäßen Polyole zeigen von der Scherrate unabhängige Viskositätswerte. |
| Kennzahl: | Bezeichnet das mit 100 multiplizierte molare Verhältnis von NCO- zu NCO-reaktiven Gruppen einer Rezeptur |
| Rohdichte: | Die Rohdichte wurde aus der Masse und dem Volumen eines 9 x 9 x 9 cm³ Schaumwürfels bestimmt. |

### 2. Materialien

| | |
|---|---|
| Adipinsäure | der Fa. BASF |
| Bernsteinsäure | der Fa. Sigma Aldrich |
| Bernsteinsäureanhydrid | der Fa. Sigma Aldrich |
| Phthalsäureanhydrid | der Fa. Polynt GmbH |
| Sojaöl | der Fa. Cargill |
| Ethylenglykol | der Fa. Sigma Aldrich |
| Diethylenglykol | der Fa. Brenntag GmbH |
| Triethylenglykol | der Fa. Sigma Aldrich |
| PEG 400 | der Fa. Oqema GmbH, Polyethylenglykol mit einer OH-Zahl von 280 mg KOH/g |
| L800 | Polypropylenglykol erhältlich von Covestro Deutschland AG mit einer OH-Zahl von 515 mg KOH / g |
| Glycerin | der Fa. Brenntag GmbH |
| Zinn(II)chlorid · 2 H₂O | der Fa. Sigma Aldrich, 28 Gew.-%-ige Lösung in Ethylenglykol |
| Polyetherpolyol 1 | Desmophen L2830, Covestro Deutschland AG, aliphatisches Polyetherpolyol mit einer OH-Zahl von 28 mg KOH/g und ca. 90 mol-% primären OH-Endgruppen und einer Viskosität von 860 mPa · s bei 25 °C (EO/PO = 30/70) |
| Polyetherpolyol 4 | Desmophen 25IK07, Covestro Deutschland AG, aliphatisches Polyetherpolyol mit einer OH-Zahl von 57 mg KOH/g und ca. 60 mol-% primären OH-Gruppen und einer Viskosität von 410 mPa · s bei 25 °C (EO/PO = 49/51) |
| Desmodur 44V20L | Desmodur 44V20L der Fa. Covestro Deutschland AG mit einem NCO-Gehalt von 30,5 bis 32,5 Gew.% |
| Tegostab | Silikonstabilisator der Evonik Industries AG |
| Desmorapid 1792 | Katalysator der Fa. Covestro Deutschland AG mit 25 Gew.% Kaliumacetat |
| Desmorapid 726b | Dimethylcyclohexylamin der Fa. Covestro Deutschland AG |

### 3. Herstellung der Polyetherpolyole

### Polyetherpolyol 2

In einen 2 l Laborautoklaven wurden unter Stickstoffatmosphäre 64,1 g L800 und 16,981 g einer 44,33 gew.-%igen Lösung von KOH in Wasser (Fa. Bernd Kraft) gegeben. Nach Verschließen des Autoklaven wurde aus ihm Restsauerstoff bei laufendem Rührer (ca. 200 U / min, Kreuzbalkenrührer) durch 3-maliges Beaufschlagen mit Stickstoff bis zu einem Absolutdruck von 5 bar und anschließendes Evakuieren auf ca. 100 mbar entfernt. Sodann wurde der Reaktor unter Rühren (ca. 800 U / min) auf 110 °C aufgeheizt und über einen Zeitraum von 3,15 h unter Vakuum gehalten. Über einen am Boden des Autoklaven befindlichen Verteilerring wurde in dieser Phase 50 ml Stickstoff pro min. eingeleitet, so dass sich ein Druck von etwa 120 mbar einstellte. Die Einleitung von Stickstoff wurde sodann gestoppt, die Temperatur wurde auf 107 °C gesenkt und es wurden 1004,2 g Propylenoxid und 431,4 g Ethylenoxid parallel über einen Zeitraum von 10,93 h unter Rühren mit 800 U / min in den Autoklaven dosiert. Nach beendeter Epoxiddosierung schloss sich eine Nachreaktionszeit von 2,22 h an. Danach wurde der Inhalt des Autoklaven bei Reaktionstemperatur über einen Zeitraum von 37 min. im Vakuum bei ca. 30 mbar ausgeheizt. Nach Abkühlen auf 80 °C wurden zunächst 150 ml destilliertes Wasser und danach 57,813 g einer 11,70 gew.-%igen wässrigen Schwefelsäurelösung zugegeben und für 0,5 Stunden gerührt. Schließlich erfolgte die Zugabe von 0,772 g IRGANOX^{®} 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die gemessene OH-Zahl betrug 27,2 mg KOH/g und es wurde bei 25 °C eine Viskosität von 978 mPas ermittelt.

### Polyetherpolyol 3

In einen 2 l Laborautoklaven wurden unter Stickstoffatmosphäre 163,0 g L800 und 16,858 g einer 44,33 gew.-%igen Lösung von KOH in Wasser (Fa. Bernd Kraft) gegeben. Nach Verschließen des Autoklaven wurde aus ihm Restsauerstoff bei laufendem Rührer (ca. 200 U / min, Kreuzbalkenrührer) durch 3-maliges Beaufschlagen mit Stickstoff bis zu einem Absolutdruck von 5 bar und anschließendes Evakuieren auf ca. 100 mbar entfernt. Sodann wurde der Reaktor unter Rühren (ca. 800 U / min) auf 110 °C aufgeheizt und über einen Zeitraum von 3,0 h unter Vakuum gehalten. Über einen am Boden des Autoklaven befindlichen Verteilerring wurde in dieser Phase 50 ml Stickstoff pro min. eingeleitet, so dass sich ein Druck von etwa 130 mbar einstellte. Die Einleitung von Stickstoff wurde sodann gestoppt, die Temperatur wurde auf 107 °C gesenkt und es wurden 615,4 g Propylenoxid über einen Zeitraum von 5,1 h unter Rühren mit 800 U / min in den Autoklaven dosiert. Nach einer Nachreaktionszeit von 3,8 h Dauer wurde die Reaktionstemperatur auf 110 °C eingestellt und der Druck durch Stickstoffgabe auf 2,66 bar erhöht. Über einen Zeitraum von 5,8 h wurden 721,8 g Ethylenoxid in den Autoklaven dosiert. Nach einer Nachreaktionszeit von 2,8 h wurde auf 80 °C abgekühlt und es wurde vorsichtig, da das Produkt zum Schäumen neigte, auf Normaldruck entspannt. Zunächst wurden 150 ml destilliertes Wasser und danach 57,470 g einer 11,70 gew.-%igen wässrigen Schwefelsäurelösung zugegeben und für 0,5 Stunden gerührt. Schließlich erfolgte die Zugabe von 0,762 g IRGANOX^{®} 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die gemessene OH-Zahl betrug 55,1 mg KOH/g und es wurde bei 25 °C eine Viskosität von 413 mPas ermittelt.

### Polyetherpolyol 5

In einen 2 l Laborautoklaven wurden unter Stickstoffatmosphäre 81,7 g L800 und 16,962 g einer 44,33 gew.-%igen Lösung von KOH in Wasser (Fa. Bernd Kraft) gegeben. Nach Verschließen des Autoklaven wurde aus ihm Restsauerstoff bei laufendem Rührer (ca. 200 U / min, Kreuzbalkenrührer) durch 3-maliges Beaufschlagen mit Stickstoff bis zu einem Absolutdruck von 2 bar und anschließendes Evakuieren auf ca. 100 mbar entfernt. Sodann wurde der Reaktor unter Rühren (ca. 800 U / min) auf 110 °C aufgeheizt und über einen Zeitraum von 3,0 h unter Vakuum gehalten. Über einen am Boden des Autoklaven befindlichen Verteilerring wurde in dieser Phase 50 ml Stickstoff pro min. eingeleitet, so dass sich ein Druck von etwa 115 mbar einstellte. Die Einleitung von Stickstoff wurde sodann gestoppt, die Temperatur wurde auf 107 °C gesenkt und es wurden 388,4 g Propylenoxid über einen Zeitraum von 3,0 h unter Rühren mit 800 U / min in den Autoklaven dosiert. Nach einer Nachreaktionszeit von 2,0 h Dauer wurde die Reaktionstemperatur auf 110 °C eingestellt und der Druck durch Stickstoffgabe auf 2,56 bar erhöht. Über einen Zeitraum von 7,0 h wurden 1030,1 g Ethylenoxid in den Autoklaven dosiert. Nach einer Nachreaktionszeit von 1,5 h wurde auf 80 °C abgekühlt und es wurde vorsichtig, da das Produkt zum Schäumen neigte, auf Normaldruck entspannt. Zunächst wurden 150 ml destilliertes Wasser und danach 57,80 g einer 11,70 gew.-%igen wässrigen Schwefelsäurelösung zugegeben und für 0,5 Stunden gerührt. Schließlich erfolgte die Zugabe von 0,734 g IRGANOX^{®} 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die gemessene OH-Zahl betrug 29,2 mg KOH/g und es wurde bei 50 °C eine Viskosität von 395 mPas ermittelt

### Polyetherpolyol 6

In einen 2 l Laborautoklaven wurden unter Stickstoffatmosphäre 64,1 g L800 und 17,118 g einer 44,33 gew.-%igen Lösung von KOH in Wasser (Fa. Bernd Kraft) gegeben. Nach Verschließen des Autoklaven wurde aus ihm Restsauerstoff bei laufendem Rührer (ca. 200 U / min, Kreuzbalkenrührer) durch 3-maliges Beaufschlagen mit Stickstoff bis zu einem Absolutdruck von 4 bar und anschließendes Evakuieren auf ca. 100 mbar entfernt. Sodann wurde der Reaktor unter Rühren (ca. 800 U / min) auf 110 °C aufgeheizt und über einen Zeitraum von 3,5 h unter Vakuum gehalten. Über einen am Boden des Autoklaven befindlichen Verteilerring wurde in dieser Phase 50 ml Stickstoff pro min. eingeleitet, so dass sich ein Druck von etwa 115 mbar einstellte. Die Einleitung von Stickstoff wurde sodann gestoppt, die Temperatur wurde auf 107 °C gesenkt und es wurden 427,4 g Propylenoxid und 999,7 g Ethylenoxid parallel über einen Zeitraum von 11,27 h unter Rühren mit 800 U / min in den Autoklaven dosiert. Nach beendeter Epoxiddosierung schloss sich eine Nachreaktionszeit von 5,0 h an. Es wurde auf 80 °C abgekühlt und es wurde vorsichtig, da das Produkt zum Schäumen neigte, auf Normaldruck entspannt. Zunächst wurden 150 ml destilliertes Wasser und danach 58,358 g einer 11,70 gew.-%igen wässrigen Schwefelsäurelösung zugegeben und für 0,5 Stunden gerührt. Schließlich erfolgte die Zugabe von 0,763 g IRGANOX^{®} 1076 und es wurde nochmals 30 min. bei 80 °C verrührt.

Das so erhaltene Gemisch wurde unter Stickstoffbeschleierung in einen Glaskolben überführt und dort zunächst im Wasserstrahlvakuum bei 80 °C entwässert und schließlich noch 3 Stunden bei 110 °C unter einem Druck von 20 mbar (Membranpumpe) ausgeheizt. Das entstandene Salz wurde in einer beheizbaren Drucknutsche über ein Tiefenfilter (T 750) abfiltriert. Die gemessene OH-Zahl betrug 25,1 mg KOH/g und es wurde bei 25 °C eine Viskosität von 1633 mPas ermittelt.

**Tabelle 2: Herstellung von langkettigen Polyetherpolyolen mit unterschiedlichen Zusammensetzungen.**

| | **Polyetherpolyol 2** | **Polyetherpolyol 3** | **Polyetherpolyol 5** | **Polyetherpolyol 6** |
|---|---|---|---|---|
| OH# [mg KOH/g] | 27,2 | 55,1 | 29,2 | 25,1 |
| PO/EO | 70/30 | 50/50 | 30/70 | 30/70 |
| Viskosität 25 °C [mPas] | 978 | 413 | fest | 1633 |
| Viskosität 50 °C [mPas] | - | - | 395 | - |
| Struktur | Statistisch | Block | Block | Statistisch |

### 4. Herstellung der Polyesterpolyole

### Beispiel 1* (Vergleichsbeispiel)

In einem 4-Liter-Vierhalskolben, ausgestattet mit mechanischem Rührer, 50 cm Vigreux-Kolonne, Thermometer, Stickstoffeinleitung, sowie Kolonnenkopf, Destillationsbrücke und Vakuummembranpumpe, wurden 1364 g (11,6 Mol) Bernsteinsäure, 917 g (14,8 Mol) Ethylenglykol, 121 g (1,1 Mol) Diethylenglykol und 13 g (0,09 Mol) Triethylenglykol vorgelegt und unter Stickstoffüberschleierung im Verlauf von 60 min. auf 200 °C erhitzt, wobei Reaktionswasser abdestillierte. Die Umsetzung wurde nach Zugabe von 20 ppm Zinn(II)chloriddihydrat bei einem Vakuum von 250 mbar und einer Temperatur von 200 °C vervollständigt.

### Analyse des Polyesters Beispiel 1*

| | |
|---|---|
| Hydroxylzahl: | 245,4 mg KOH/g |
| Säurezahl: | 0,6 mg KOH/g |
| Viskosität: | fest (25 °C) |

Die Polyesterpolyole aus den Beispielen 2*, 3* (Vergleichsbeispiele) sowie 4 - 7 wurden analog wie in Beispiel 1* beschrieben, hergestellt.

**Tabelle 2: Zusammensetzung / Eigenschaften von Polyesterpolyolen**

| Beispiel | | 1* | 2* | 3* | 4 | 5 | 6 | 7 |
|---|---|---|---|---|---|---|---|---|
| Bernsteinsäure | [Teile] | 56,5 | 46,3 | 52,6 | 36.2 | - | 50,3 | 43,6 |
| Bernsteinsäureanhydrid | [Teile] | - | - | - | - | 46,1 | - | - |
| Phthalsäureanhydrid | [Teile] | - | - | - | 5,0 | - | - | - |
| Ethylenglykol | [Teile] | 38,5 | 26,1 | 25,6 | 17,7 | 19,9 | 18,4 | - |
| Diethylenglykol | [Teile] | 5,0 | 9,6 | 21,8 | 17,7 | 34,0 | 31,4 | 56,4 |
| Triethylenglykol | [Teile] | 0,6 | - | - | - | - | - | - |
| Polyethylenglykol 400 | [Teile] | - | 18,0 | - | 23,5 | - | - | - |
| OHZ, exp. | [mg KOH/g] | 245,4 | 212,8 | 206,7 | 204,7 | 212,2 | 211,1 | 199,6 |
| SZ, exp. | [mg KOH/g] | 0,6 | 1,1 | 0,7 | 0,5 | 1,2 | 0,2 | 1,5 |
| Viskosität, 25 °C | [mPa · s] | fest | 2350 | 3100 | 1840 | 2810 | 3000 | 2140 |
| Ethylenglykol / Diethylenglykol | [mol/mol] | 13,0 | 4,6 | 2,0 | 1,7 | 1,0 | 1,0 | 0 |
| Kristallisation nach 3 Monaten | | ja | ja | ja | nein | nein | nein | nein |

Die Tabelle 2 zeigt, dass Polyesterpolyole, bei denen die Säurekomponente zu mindestens 90 mol% auf Bernsteinsäure(anhydrid) basiert, bei Ethylenglykol/Diethylenglykol-Verhältnissen von < 2 lagerstabil sind (Beispiel 4 - 7). Bei höheren Verhältnissen tritt während der Lagerung Kristallisation auf (Beispiele 1* - 3*).

### 5. Abmischung von Polyesterpolyolen und Polyetherpolyolen, Bestimmung der Phasenstabilität und der Pentanlöslichkeit:

Die Polyole werden gemäß Tabelle 3 mit einer definierten Menge an i/n-Pentan (70:30) am Pendraulikmischer abgemischt. Die Proben werden zentrifugiert und aus der Polyol/Pentan Phase wird eine Probe für GC/MS Untersuchungen entnommen.

**Tabelle 3: Abmischung von Polyesterpolyolen mit Polyetherpolyolen**

| Beispiel | 8° | 9° | 10° | 11 | 12 | 13° | 14° |
|---|---|---|---|---|---|---|---|
| Polyesterpolyol aus Beispiel 6 | 100 | 94.6 | 94.6 | 94.6 | 94.6 | 94.6 | 94.6 |
| Polyetherpolyol 1 | - | 5.4 | - | - | - | - | - |
| Polyetherpolyol 2 | - | - | 5.4 | - | - | - | - |
| Polyetherpolyol 3 | - | - | - | 5.4 | - | - | - |
| Polyetherpolyol 4 | - | - | - | - | 5.4 | - | - |
| Polyetherpolyol 5 | - | - | - | - | - | 5.4 | - |
| Polyetherpolyol 6 | - | - | - | - | - | - | 5.4 |
| Aussehen | klar | zweiphasig | trübe, zweiphasig | klar | klar | klar | klar |
| Pentanlöslichkeit in Gew.% | 11,4 | 12,2 | 10,0 | 13,0 | 13,9 | 10,6 | 9,8 |

In den Beispielen 9° und 10° bilden sich nach 24 Stunden Lagerung 2 Phasen aus, wobei die obere Phase das jeweilige Polyetherpolyol enthält. Die Mischungen sind somit nicht phasenstabil. Bei den erfindungsgemäßen Beispielen 11 und 12 sowie den Beispielen 13° und 14° bildet die Mischung eine klare, homogene Lösung. Die Polyolmischungen in Beispiel 11 und 12 zeigen jedoch eine erhöhte Verträglichkeit mit Pentan auf, verglichen mit dem reinen Polyesterpolyol in Beispiel 8°. Diese Pentanverträglichkeit ist vorteilhaft für die Verarbeitung in PUR/PIR-Hartschäumen. Bei allen Polyolzusammensetzungen der Beispiele 8° bis 20° handelt es sich um erfindungsgemäße Polyolzusammensetzungen, wobei die nicht mit "°" markierten Beispiele besonders vorteilhafte Ausführungsformen darstellen.

**Tabelle 4: Zusammensetzung und Eigenschaften von PUR-/PIR-Hartschaumstoffen**

| Beispiel | | 15° | 16° | 17 | 18 | 19° | 20° |
|---|---|---|---|---|---|---|---|
| Polyesterpolyol aus Beispiel 6 | [Teile] | 87 | 87 | 87 | 87 | 87 | 87 |
| Polyetherpolyol 1 | [Teile] | 5 | - | - | - | - | - |
| Polyetherpolyol 2 | [Teile] | - | 5 | - | - | - | - |
| Polyetherpolyol 3 | [Teile] | - | - | 5 | - | - | - |
| Polyetherpolyol 4 | [Teile] | - | - | - | 5 | - | - |
| Polyetherpolyol 5 | [Teile] | - | - | - | - | 5 | - |
| Polyetherpolyol 6 | [Teile] | - | - | - | - | - | 5 |
| Triethylphosphat | [Teile] | 8 | 8 | 8 | 8 | 8 | 8 |
| Tegostab | [Teile] | 2 | 2 | 2 | 2 | 2 | 2 |
| Wasser | [Teile] | 0.9 | 0.9 | 0.9 | 0.9 | 0.9 | 0.9 |
| Desmorapid 1792 | [Teile] | 3.3 | 3.3 | 3.3 | 3.3 | 3.3 | 3.3 |
| Desmorapid 726B | [Teile] | 0.8 | 0.8 | 0.8 | 0.8 | 0.8 | 0.8 |
| i/n-Pentan (70:30) | [Teile] | 16.2 | 16.2 | 16.2 | 16.2 | 16.2 | 16.2 |
| Desmodur | [Teile] | 200 | 200 | 200 | 200 | 200 | 200 |
| Kennzahl | [-] | 311 | 311 | 310 | 310 | 311 | 311 |
| Startzeit | [s] | 9 | 7 | 9 | 7 | 9 | 8 |
| Abbindezeit | [s] | 28 | 21 | 26 | 21 | 25 | 26 |
| Klebfreizeit | [s] | 34 | 27 | 31 | 25 | 32 | 31 |
| Kernrohdichte | [kg/m³] | 30,3 | 29,8 | 30,4 | 29,9 | 30,3 | 30,2 |
| Dimensionsstabilität 24 h 100 °C | [%] | 0,5 | -0,9 | -0,1 | 0,2 | 0,6 | 2,2 |
| | | 0,7 | 0,0 | 1,2 | 0,4 | 1,7 | 0,7 |
| | | 0,1 | 0,1 | 0,1 | 0,0 | 0,0 | -0,1 |
| Dimensionsstabilität 24 h -22 °C | [%] | -2,2 | -1,4 | -0,4 | -0,1 | -0,6 | -3,1 |
| | | -4,6 | 0,1 | -0,4 | -0,4 | -1,8 | -5,9 |
| | | 0,5 | 0,3 | 0,3 | 0,2 | 0,4 | 0,3 |
| Wärmeleitfähigkeit 0-Wert | [mW/K m] | 21,0 | 20,7 | 21,0 | 20,6 | 21,0 | 21,0 |

Das Polyesterpolyol aus Beispiel 6 wurde jeweils in verschiedenen Versuchen 15 - 20 mit einem der Polyetherpolyole 1-6 versetzt und basierend auf einer PIR-Formulierung zu Schäumen umgesetzt.

## Patentansprüche

1. Polyesterpolyol B1), welches eine Funktionalität von 1,8 bis 5, eine OH-Zahl von 150 bis 300 mg KOH/g sowie eine Säurezahl von 0,2 bis 3,0 mg KOH/g aufweist und erhältlich ist durch die Umsetzung einer Säurekomponente, welche ≥ 50 Gew.-% Bernsteinsäure oder Bernsteinsäureanhydrid enthält, mit einer Alkoholkomponente, welche zu ≥ 60 Gew.-% aus einer Mischung aus Monoethylenglykol und Diethylenglykol im molaren Verhältnis von < 2 besteht.

2. Polyesterpolyol gemäß Anspruch 1, **dadurch gekennzeichnet, dass** die Säurekomponente aus Bernsteinsäure oder Bernsteinsäureanhydrid besteht.

3. Polyesterpolyol gemäß einem der Ansprüche 1 - 2, **dadurch gekennzeichnet, dass** die Alkoholkomponente zusätzlich Triethylenglykol, Tetraethylenglykol oder Polyethylenglykole enthält.

4. Polyesterpolyol gemäß einem der Ansprüche 1 - 3, **dadurch gekennzeichnet, dass** es eine Funktionalität von 1,8 bis 3,0 aufweist.

5. Formulierung B) zur Herstellung von PUR-/PIR-Hartschaumstoffen enthaltend ein Polyesterpolyol gemäß Anspruch 1 - 4.

6. Formulierung B) zur Herstellung von PUR-/PIR-Hartschaumstoffen enthaltend
B1) ein Polyesterpolyol, welches erhältlich ist durch die Umsetzung einer Säurekomponente, welche ≥ 50 Gew.-% Bernsteinsäure oder Bernsteinsäureanhydrid enthält, mit einer Alkoholkomponente, welche ≥ 50 Gew.-% Diethylenglykol oder eine Mischung aus Monoethylenglykol und Diethylenglykol im molaren Verhältnis von < 2 enthält,
B2) weitere Polyole, welche von B1) verschieden sind, und
B3) optional weitere isocyanat-reaktive Verbindungen, welche von den Polyolen B1) und B2) verschieden sind, und
B4) optional Hilfs- und Zusatzstoffe, und
B5) optional Wasser,
**dadurch gekennzeichnet, dass** B2) ein Polyol ausgewählt aus Polyetherpolyolen mit einer Hydroxylzahl zwischen 10 und 100 mg KOH/g, mit Funktionalitäten von ≥1,2 bis ≤ 3,5 und hergestellt durch Alkoxylierung einer geeigneten Starterkomponente mit einer Mischung aus Ethylenoxid (EO) und Propylenoxid (PO) mit einem EO-Gehalt von 40 - 60 Gew.%, bezogen auf die Gesamtmenge von EO und PO, umfasst.

7. Formulierung B) gemäß Anspruch 6, **dadurch gekennzeichnet, dass** B2) ein oder mehrere Polyesterpolyole und/oder Polyetheresterpolyole umfasst, welche eine Funktionalität von ≥1,2 bis ≤ 3,5, insbesondere ≥1,6 bis ≤ 2,4 und eine Hydroxylzahl zwischen 80 bis 290 mg KOH/g aufweisen.

8. Formulierung B) gemäß einem der Ansprüche 5 bis 7, **dadurch gekennzeichnet, dass** der Anteil an Verbindungen ausgewählt aus der Gruppe bestehend aus Polyesterpolyolen und Polyetheresterpolyolen in der Komponente B) bezogen auf das Gesamtgewicht der isocyanat-reaktiven Verbindungen in der Komponente B) mindestens 40 Gew.-%, besonders bevorzugt mindestens 50 Gew.-% und ganz besonders bevorzugt mindestens 55 Gew.-%, beträgt.

9. Formulierung B) gemäß einem der Ansprüche 6 - 8 für die Herstellung von PUR-/PIR-Hartschaumstoffen enthaltend
- 50 bis 95 Gew.-% einer oder mehrerer Verbindung(en) ausgewählt aus der Gruppe bestehend aus Polyesterpolyolen und Polyetheresterpolyolen mit einer Hydroxylzahl im Bereich von 80 mg KOH/g bis 290 mg KOH/g,
umfassend ein oder mehrere Polyole B1), und
- 1,0 - 15,0 Gew.-%, bevorzugt 2,0 - 10 Gew.-% und besonders bevorzugt 3,0 - 7,0 Gew.-% wenigstens ein Polyols ausgewählt aus langkettigen aliphatischen Polyetherpolyolen, welche erhältlich sind durch Alkoxylierung einer Starterkomponente, bevorzugt einer aliphatischen Starterkomponente, mit Ethylenoxid (EO) und Propylenoxid (PO) im Verhältnis von EO/PO = 40/60 - 60/40, mehr bevorzugt von 45/55 - 55/45, und mit einer OH-Zahl von 10 - 100 mg KOH/g, bevorzugt 20 - 80 mg KOH/g und insbesondere bevorzugt 30 - 70 mg KOH/g, wobei die Epoxide während der Alkoxylierung entweder blockweise dosiert werden oder zeitgleich als Gemisch oder in einer Paralleldosierung, resultierend in innerhalb der Polyetherketten statistisch verteilten Oxyalkyleneinheiten,
wobei die Angaben in Gew.-% für die Polyole jeweils auf alle isocyanat-reaktiven Komponenten der Formulierung B) bezogen sind.

10. Reaktionssystem zur Herstellung von PUR-/PIR-Hartschaumstoffen, umfassend die folgenden Komponenten:
A) eine Polyisocyanatkomponente, bevorzugt ein Gemisch von Diphenylmethan-4,4'-diisocyanat mit Isomeren und höherfunktionellen Homologen,
B) die erfindungsgemäße Formulierung B) gemäß einem der Ansprüche 5 - 9,
C) gegebenenfalls weitere Hilfs- und Zusatzstoffe und
D) optional Treibmittel und Co-Treibmittel,
wobei die organische Polyisocyanatkomponente A) zu den Komponenten B) und ggf. C) in einem solchen Mengenverhältnis zueinander eingesetzt sind, dass sich ein Index von 100 bis 600 ergibt, insbesondere von 140 bis 450.

11. Verwendung einer Formulierung B) gemäß einem der Ansprüche 5 - 9) bei der Herstellung von PUR(Polyurethan)- und PUR/PIR-Hartschaumstoffen, wie zum Beispiel Polyurethan-Dämmplatten, Metall-Verbund-Elementen, Polyurethan-Blockschaum, Polyurethan-Sprühschaum, Polyurethan-Ortschäume oder auch in Ein- oder Mehrkomponenten-Montageschaum oder als Klebstoff-Rohstoff.

12. Verfahren zur Herstellung von PUR-/PIR-Hartschaumstoffen durch Umsetzung eines Reaktionssystems gemäß Anspruch 10.

13. PUR-/PIR-Hartschaumstoff, erhältlich durch ein Verfahren gemäß Anspruch 12.

14. PUR-PIR-Hartschaumstoff nach Anspruch 13, **dadurch gekennzeichnet, dass** der Hartschaumstoff in Form einer Dämmplatte oder als Verbundelement mit flexiblen oder nicht-flexiblen Deckschichten vorliegt und eine Dichte von 25 bis 65 kg/ m³ aufweist, insbesondere 30 bis 45 kg/m³ oder dass der Hartschaumstoff als Blockschaum vorliegt und eine Dichte von 25 bis 300 kg/m³ aufweist, insbesondere 30 bis 80 kg/m³.

## Claims

1. Polyester polyol B1) which has a functionality of 1.8 to 5, an OH number of 150 to 300 mg KOH/g and an acid number of 0.2 to 3.0 mg KOH/g and is obtainable by reacting an acid component containing ≥ 50% by weight of succinic acid or succinic anhydride with an alcohol component consisting to an extent of ≥ 60% by weight of a mixture of monoethylene glycol and diethylene glycol in a molar ratio of < 2.

2. Polyester polyol according to Claim 1, **characterized in that** the acid component consists of succinic acid or succinic anhydride.

3. Polyester polyol according to either of Claims 1-2, **characterized in that** the alcohol component additionally contains triethylene glycol, tetraethylene glycol or polyethylene glycols.

4. Polyester polyol according to any of Claims 1-3, **characterized in that** it has a functionality of 1.8 to 3.0.

5. Formulation B) for producing rigid PUR/PIR foams containing a polyester polyol according to Claims 1-4.

6. Formulation B) for producing rigid PUR/PIR foams containing
B1) a polyester polyol which is obtainable by reaction of an acid component containing ≥ 50% by weight of succinic acid or succinic anhydride with an alcohol component containing ≥ 50% by weight of diethylene glycol or a mixture of monoethylene glycol and diethylene glycol in a molar ratio of < 2,
B2) further polyols distinct from B1) and
B3) optionally further isocyanate-reactive compounds distinct from the polyols B1) and B2) and
B4) optionally auxiliary and additive substances and
B5) optionally water,
**characterized in that** B2) comprises a polyol selected from polyether polyols having a hydroxyl number between 10 and 100 mg KOH/g, having functionalities of ≥ 1.2 to ≤ 3.5 and produced by alkoxylation of a suitable starter component with a mixture of ethylene oxide (EO) and propylene oxide (PO) having an EO content of 40-60% by weight based on the total amount of EO and PO.

7. Formulation B) according to Claim 6, **characterized in that** B2) comprises one or more polyester polyols and/or polyether ester polyols having a functionality of ≥ 1.2 to ≤ 3.5, especially ≥ 1.6 to ≤ 2.4, and a hydroxyl number between 80 to 290 mg KOH/g.

8. Formulation B) according to any of Claims 5 to 7, **characterized in that** the proportion of compounds selected from the group consisting of polyester polyols and polyether ester polyols in component B) based on the total weight of the isocyanate-reactive compounds in component B) is at least 40% by weight, particularly preferably at least 50% by weight and very particularly preferably at least 55% by weight.

9. Formulation B) according to any of Claims 6-8 for producing rigid PUR/PIR foams containing
- 50% to 95% by weight of one or more compounds selected from the group consisting of polyester polyols and polyether ester polyols having a hydroxyl number in the range from 80 mg KOH/g to 290 mg KOH/g comprising one or more polyols B1) and
- 1.0% - 15.0% by weight, preferably 2.0% - 10% by weight and particularly preferably 3.0% - 7.0% by weight of at least one polyol selected from long-chain aliphatic polyether polyols obtainable by alkoxylation of a starter component, preferably an aliphatic starter component, with ethylene oxide (EO) and propylene oxide (PO) in the ratio of EO/PO = 40/60 - 60/40, more preferably of 45/55
- 55/45, and having an OH number of 10 - 100 mg KOH/g, preferably 20 - 80 mg KOH/g and especially preferably 30
- 70 mg KOH/g, wherein the epoxides are added either blockwise during alkoxylation or simultaneously as a mixture or in a parallel addition, thus resulting in oxyalkylene units randomly distributed within the polyether chains,
wherein the reported amounts in % by weight for the polyols are in each case based on all isocyanate-reactive components of the formulation B).

10. Reaction system for producing rigid PUR/PIR foams comprising the following components:
A) a polyisocyanate component, preferably a mixture of diphenylmethane 4,4'-diisocyanate with isomers and higher-functional homologues,
B) the inventive formulation B) according to any of Claims 5-9,
C) optionally further auxiliary and additive substances and
D) optionally blowing agents and co-blowing agents,
wherein the organic polyisocyanate component A) and the components B) and optionally C) are employed in such a ratio relative to one another as to result in an index of 100 to 600, especially of 140 to 450.

11. Use of a formulation B) according to one of Claims 5-9 in the production of rigid PUR (polyurethane) and PUR/PIR foams, for example polyurethane insulation sheets, metal composite elements, polyurethane block foam, polyurethane spray foam, polyurethane in-situ foams or else in one- or multi-component expanding foam or as a raw material for adhesives.

12. Process for producing rigid PUR/PIR foams by reacting a reaction system according to Claim 10.

13. Rigid PUR/PIR foam obtainable by a process according to Claim 12.

14. Rigid PUR/PIR foam according to Claim 13, **characterized in that** the rigid foam is in the form of an insulation sheet or in the form of a composite element having flexible or inflexible outer layers and has a density of 25 to 65 kg/m³, in particular 30 to 45 kg/m³, or **in that** the rigid foam is in the form of a block foam and has a density of 25 to 300 kg/m³, in particular 30 to 80 kg/m³.

## Revendications

1. Polyesterpolyol B1), qui présente une fonctionnalité de 1,8 à 5, un indice d'OH de 150 à 300 mg de KOH/g ainsi qu'un indice d'acide de 0,2 à 3,0 mg de KOH/g et qui peut être obtenu par transformation d'un composant acide, qui contient ≥ 50 % en poids d'acide succinique ou d'anhydride de l'acide succinique, avec un composant alcool, qui est constitué, à raison de ≥ 60 % en poids, d'un mélange de monoéthylèneglycol et de diéthylèneglycol dans un rapport molaire < 2.

2. Polyesterpolyol selon la revendication 1, **caractérisé en ce que** le composant acide est constitué d'acide succinique ou d'anhydride de l'acide succinique.

3. Polyesterpolyol selon l'une des revendications 1 à 2, **caractérisé en ce que** le composant alcool contient en outre du triéthylèneglycol, du tétraéthylèneglycol ou des polyéthylèneglycols.

4. Polyesterpolyol selon l'une des revendications 1 à 3, **caractérisé en ce qu'**il présente une fonctionnalité de 1,8 à 3,0.

5. Formulation B) pour la préparation de mousses rigides de PUR/PIR contenant un polyesterpolyol selon la revendication 1 à 4.

6. Formulation B) pour la préparation de mousses rigides de PUR/PIR, contenant
B1) un polyesterpolyol, qui peut être obtenu par transformation d'un composant acide, qui contient ≥ 50 % en poids d'acide succinique ou d'anhydride de l'acide succinique, avec un composant alcool, qui contient ≥ 50 % en poids de diéthylèneglycol ou un mélange de monoéthylèneglycol et de diéthylèneglycol dans un rapport molaire < 2,
B2) d'autres polyols, qui sont différents de B1) et
B3) éventuellement d'autres composés réactifs vis-à-vis d'isocyanate, qui sont différents des polyols B1) et B2) et
B4) éventuellement des adjuvants et des additifs et
B5) éventuellement de l'eau,
**caractérisée en ce que** B2) comprend un polyol choisi parmi les polyétherpolyols présentant un indice d'OH entre 10 et 100 mg de KOH/g, présentant des fonctionnalités ≥ 1,2 à ≤ 3,5 et préparés par alcoxylation d'un composant de départ approprié avec un mélange d'oxyde d'éthylène (OE) et d'oxyde de propylène (OP) présentant une teneur en OE de 40 à 60 % en poids, par rapport à la quantité totale d'OE et d'OP,

7. Formulation B) selon la revendication 6, **caractérisée en ce que** B2) comprend un ou plusieurs polyesterpolyols et/ou polyétheresterpolyols, qui présentent une fonctionnalité ≥ 1,2 à ≤ 3,5, en particulier ≥ 1,6 à ≤ 2,4 et un indice d'hydroxyle entre 80 et 290 mg de KOH/g.

8. Formulation B) selon l'une des revendications 5 à 7, **caractérisée en ce que** la proportion de composés choisis dans le groupe constitué par les polyesterpolyols et les polyétheresterpolyols dans le composant B), par rapport au poids total des composés réactifs vis-à-vis d'isocyanate dans le composant B), représente au moins 40 % en poids, de manière particulièrement préférée au moins 50 % en poids et de manière tout particulièrement préférée au moins 55 % en poids.

9. Formulation B) selon l'une des revendications 6 à 8 pour la préparation de mousses rigides de PUR/PIR contenant
- 50 à 95 % en poids d'un ou de plusieurs composés choisis dans le groupe constitué par les polyesterpolyols et les polyétheresterpolyols présentant un indice d'hydroxyle dans la plage de 80 mg de KOH/g à 290 mg de KOH/g,
comprenant un ou plusieurs polyols B1) et
- 1,0 à 15,0 % en poids, de préférence 2,0 à 10 % en poids et de manière particulièrement préférée 3,0 à 7,0 % en poids d'au moins un polyol choisi parmi les polyétherpolyols aliphatiques à longue chaîne, qui peuvent être obtenus par alcoxylation d'un composant de départ, de préférence un composant de départ aliphatique, avec de l'oxyde d'éthylène (OE) et de l'oxyde de propylène (OP) dans un rapport OE/OP = 40/60 à 60/40, plus préférablement de 45/55 à 55/45, et présentant un indice d'OH de 10 à 100 mg de KOH/g, de préférence de 20 à 80 mg de KOH/g et en particulier de préférence de 30 à 70 mg de KOH/g, les époxydes étant dosés pendant l'alcoxylation soit en bloc, soit simultanément sous forme de mélange, soit dans un dosage en parallèle, ce qui résulte en des motifs oxyalkylène répartis statistiquement dans les chaînes polyéther,
les indications en % en poids pour les polyols se rapportant à chaque fois à tous les composants réactifs vis-à-vis d'isocyanate de la formulation B).

10. Système de réaction pour la préparation de mousses rigides de PUR/PIR, comprenant les composants suivants :
A) un composant polyisocyanate, de préférence un mélange de 4,4'-diisocyanate de diphénylméthane avec des isomères et homologues à plus haute fonctionnalité,
B) la formulation B) selon l'une des revendications 5 à 9,
C) le cas échéant d'autres adjuvants et additifs,
D) éventuellement des agents gonflants et des co-agents gonflants,
le composant polyisocyanate organique A) et les composants B) et le cas échéant C) étant utilisés les uns par rapport aux autres dans un rapport de quantités tel qu'on obtient un indice de 100 à 600, en particulier de 140 à 450.

11. Utilisation d'une formulation B) selon l'une des revendications 5 à 9 lors de la préparation de mousses rigides de PUR (polyuréthane) et de PUR/PIR, comme par exemple des plaques isolantes en polyuréthane, des éléments composites avec du métal, une mousse en bloc de polyuréthane, une mousse pulvérisée de polyuréthane, une mousse de polyuréthane produite sur site ou également dans des mousses de montage à un ou plusieurs composants ou comme matière première d'adhésif.

12. Procédé de préparation de mousses rigides de PUR/PIR par transformation d'un système de réaction selon la revendication 10.

13. Mousse rigide de PUR/PIR pouvant être obtenue par un procédé selon la revendication 12.

14. Mousse rigide de PUR/PIR selon la revendication 13, **caractérisée en ce que** la mousse rigide se trouve sous forme d'une plaque isolante ou sous forme d'élément composite comportant des couches de recouvrement flexibles ou non flexibles et présente une masse volumique de 25 à 65 kg/m³, en particulier 30 à 45 kg/m³ ou **en ce que** la mousse rigide se trouve sous forme de mousse en bloc et présente une masse volumique de 25 à 300 kg/m³, en particulier 30 à 80 kg/m³.
